# EUROPEAN PATENT APPLICATION

(11) **EP 3 244 311 A1**
(43) Date of publication of application: **15.11.2017**
(21) Application number: 16169024.3
(22) Date of filing: 10.05.2016
(51) Int. Cl.: G06F 9/54, G06F 9/455, G06F 9/50

(54) **MULTIPROCESSOR SYSTEM AND METHOD FOR OPERATING A MULTIPROCESSOR SYSTEM**

(71) Applicant: Huawei Technologies Co., Ltd., Longgang District Shenzhen, Guangdong 518129 (CN)
(72) Inventor: KOKKONEN, Jani, 80992 Munich (DE); FALICO, Veaceslav, 80992 Munich (DE); PANOOR, Ajo, 80992 Munich (DE)
(74) Representative: Gill Jennings & Every LLP

(57) **Abstract**

The invention provides a multiprocessor system 100. The multiprocessor system 100 comprises a first processor 101 configured to execute at least a first operating system 102 and at least one second processor 103 configured to execute at least a second operating system 104. The first processor 101 and the at least one second processor 103 are communicatively linked by a shared memory unit 105 writable by the first operating system 102 and readable by the second operating system 104. The first operating system 102 is configured to send extended messages, using the shared memory unit 105, to the second operating system 104, wherein the second operating system 104 is configured to perform a virtualization operation based on the extended messages received from the first operating system 102.

## Description

### TECHNICAL FIELD

The present invention relates to the field of multiprocessor systems and computer system and hardware virtualization, in particular to virtualization operations executed in a multiprocessor system on at least one processor. Specific inter-processor messages can be used to trigger virtualization and communication via a shared memory unit.

### BACKGROUND

Known multiprocessor systems typically include two or more processors (e.g. processors of homo- or heterogeneous architecture and/or processors with multiple cores). Processors, e.g. CPUs and/or GPUs, can share some or all of the memory resources such as random access memory (RAM) and input/output (I/O) devices.

A processors of the multiprocessor system can run at least one instance of an operating system, wherein the operating system typically is a system software that manages at least partially access and use of the resources.

In multiprocessor systems, messages are used to exchange information between the processors and/or operating systems typically running on different processors. The messages for example can include instructions to power on or power off a processor, or to start and/or stop an operating system on a processor. The messages are typically exchanged between at least some of the processors by means of a shared memory unit, e.g. memory resources of the conventional multiprocessor system such as random access memory (RAM), which can be accessed by the multiple processors.

An example using such messages is the remote processor messaging (RPMsg) framework, which is e.g. applied in UNIX and/or Linux based operating systems. The RPMsg framework can also be a remote processor framework, i.e. remoteproc, wherein the messages defined in or by the remoteproc framework are remoteproc messages.

In a known multiprocessor system running a Linux based operating systems using the remoteproc framework, it is e.g. possible to start a Linux based operating system on a first processor of the multiprocessor system which is in turn able to start another Linux based operating system on a second processor of the multiprocessor system using the remoteproc messages. The first processor and the second processor as well as the operating systems running on the first processor and the second processor can be of different system architecture (e.g. of ARM, RISC, CISC, MIPS, SPARC, PowerPC, x86, and/or CUDA architecture). The remoteproc messages are exchanged between the first processor and the second processor by means of a shared memory unit. As a result, in a multiprocessor system, messages according to the remoteproc framework can be used to control separate operating systems which are running on multiple processors and to setup an initial communication channel for exchanging information between the multiple processors and operating systems. Additionally, a way is provided to establish exchange of information in conventional multiprocessor systems that employ processors and operating systems of various architectures.

With an increasing importance of virtualization technology in the field of multiprocessor systems, the need arises for a way to dynamically use virtualization systems on multiple processors of a multiprocessor system that allows to perform and control virtualization operations in the multiprocessor system.

However, remoteproc messages are not able to include information that allows to perform and control virtualization operations.

In view of the above, the present invention provides a multiprocessor system that allows for a message based way to exchange information between multiple processors of the multiprocessor system that enables to perform and control virtualization operations. In particular, extended messages according to the invention can include commands to perform and control virtualization operations.

The above-mentioned object of the present invention is achieved by the solution provided in the independent claims. Advantageous implementations of the present invention are further defined in the respective dependent claims.

### SUMMARY

According to a first aspect, the invention provides a multiprocessor system, comprising: a first processor configured to execute at least a first operating system and at least one second processor configured to execute at least a second operating system, wherein the first processor and the at least one second processor are communicatively linked by a shared memory unit writable by the first operating system and readable by the second operating system, wherein the first operating system is configured to send extended messages, using the shared memory unit, to the second operating system, wherein the second operating system is configured to perform a virtualization operation based on the extended messages received from the first operating system.

According to a first implementation of the first aspect, the first operating system can be configured to provide the second operating system to the second processor, wherein the second processor can be configured to start the second operating system in a starting phase.

According to a second implementation of the first aspect, the second operating system and/or the virtualization operation can be configured by the extended messages received by the second operating system.

According to a third implementation of the first aspect, the second operating system can be configured to at least partially perform the virtualization operation by changing into a virtualization mode.

According to a fourth implementation of the first aspect, the second operating system can be configured to at least partially perform the virtualization operation by initializing, starting and/or stopping execution of at least one virtual machine.

According to a fifth implementation of the first aspect, the extended messages can be configured to define parameters for performing the virtualization operation, in particular parameters for configuring the at least one virtual machine and/or the virtualization mode.

According to a sixth implementation of the first aspect, the second operating system can comprise a control module, which can be configured to receive the extended messages and to initialize the virtualization operation.

According to a seventh implementation of the first aspect, in the virtualization mode, the second operating system can be configured to switch to a hypervisor mode.

According to an eighth implementation of the first aspect, the first operating system can be configured to send the extended messages, by writing to the shared memory unit, and the second operating system can be configured to receive the extended messages, by reading from the shared memory unit and/or vice versa, in particular to facilitate a bi-directional communication.

According to a ninth implementation of the first aspect, the first operating system can be configured to provide an interface for receiving the extended messages and/or information directly or indirectly defining the extended messages.

According to a tenth implementation of the first aspect, the multiprocessor system can be an embedded system.

According to an eleventh implementation of the first aspect, the first operating system can be a hypervisor.

According to a second aspect, the invention provides a method for operating a multiprocessor system comprising the steps of executing, on a first processor, at least a first operating system, and executing, on at least one second processor, at least a second operating system, communicatively linking, via a shared memory unit writable by the first operating system and readable by second operating system, the first processor and the at least one second processor, sending, by the first operating system, extended messages, using the shared memory unit, to the second operating system, and performing, by the second operating system, a virtualization operation based on the extended messages received from the first operating system. The step of communicatively linking the first processor and the at least one second processor via a shared memory unit allows an efficient exchange of extended messages between the first and the second processors.

According to a first implementation of the second aspect, the first operating system can provide the second operating system to the second processor, wherein the second processor can start the second operating system in a starting phase.

According to a second implementation of the second aspect, the extended messages received by the second operating system can configure the second operating system and/or the virtualization operation.

According to a third implementation of the second aspect, the second operating system can at least partially perform the virtualization operation by changing into a virtualization mode.

According to a fourth implementation of the second aspect, the second operating system can at least partially perform the virtualization operation by initializing, starting and/or stopping execution of at least one virtual machine.

According to a fifth implementation of the second aspect, the extended messages can define parameters for performing the virtualization operation, in particular parameters for configuring the at least one virtual machine and/or the virtualization mode.

According to a sixth implementation of the second aspect, the second operating system can comprise a control module, which can receive the extended messages and can initialize the virtualization operation.

According to a seventh implementation of the second aspect, in the virtualization mode, the second operating system can switch to a hypervisor mode.

According to an eighth implementation of the second aspect, the first operating system can send the extended messages, by writing to the shared memory unit, and the second operating system can receive the extended messages, by reading from the shared memory unit and/or vice versa, in particular to facilitate a bi-directional communication.

According to a ninth implementation of the second aspect, the first operating system can provide an interface for receiving the extended messages and/or information directly or indirectly defining the extended messages.

According to a tenth implementation of the second aspect, the multiprocessor system can be an embedded system.

According to an eleventh implementation of the second aspect, the first operating system can be a hypervisor.

### BRIEF DESCRIPTION OF THE DRAWINGS

The above-described aspects and implementation forms of the present invention will be explained in the following description of specific embodiments in relation to the enclosed drawings, in which:
- Fig. 1: shows a schematic overview of a multiprocessor system according to an embodiment of the present invention;
- Fig. 2: shows a schematic overview of a multiprocessor system according to an embodiment of the present invention in detail;
- Fig. 3: shows a schematic overview of a multiprocessor system according to an embodiment of the present invention in detail;
- Fig. 4: shows a flow-diagram of a boot-up process in a multiprocessor system;
- Fig. 5: shows a flow-diagram of a virtualization operation in a multiprocessor system;
- Fig. 6: shows a schematic overview of a packet header structure of a message;
- Fig. 7: shows a schematic overview of a payload structure according to the invention;
- Fig. 8: shows a flow-diagram of a method according to an embodiment of the present invention.

### DETAILED DESCRIPION OF THE EMBODIMENTS

Generally, it has to be noted that all arrangements, devices, modules, components, models, elements, units and means and so forth described in the present application could be implemented by software or hardware elements or any kind of combination thereof. All steps which are performed by the various entities described in the present application as well as the functionality described to be performed by the various entities are intended to mean that the respective entity is adapted to or configured to perform the respective steps and functionalities. Even if in the following description of the specific embodiments, a specific functionality or step to be performed by a general entity is not reflected in the description of a specific detailed element of the entity which performs the specific step or functionality, it should be clear for a skilled person that these methods and functionalities can be implemented in respective hardware or software elements, or any kind of combination thereof. Further, the method of the present invention and its various steps are embodied in the functionalities of the various described apparatus elements.

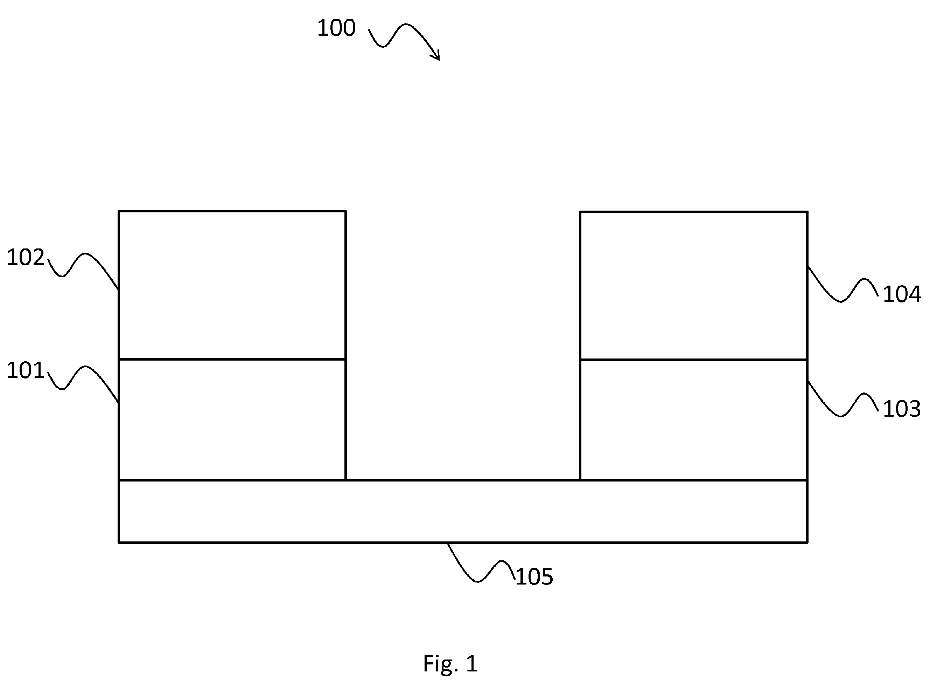

Fig. 1 shows a schematic overview of a multiprocessor system 100 according to an embodiment of the present invention. The multiprocessor system 100 includes a first processor 101, which is configured to execute at least a first operating system 102. The multiprocessor system 100 further includes at least one second processor 103, which is configured to execute at least one second operating system 104. Although Fig. 1 exclusively shows one instance of the first operating system 102, the second processor 103 and the second operating system 104, the multiprocessor system 100 can include multiple instances of the first operating system 102, the second processor 103 and the second operating system 104 each. Specifically, several first operating systems 102 can be executed on the first processor 101, several second processors 103 can be included in the multiprocessor system 100, and several second operating systems 104 can be executed on each of the second processors 103.

The first processor 101 and the at least one second processor 103 can be any kind of processing unit, e.g. a central processing unit (CPU), a graphics processing unit (GPU), a microprocessor or a multi-core processor. The first processor 101 and the at least one second processor 103 can be of the same or of different kind, e.g. they can be of homo-or heterogeneous architecture.

The first processor 101 and/or the at least one second processor 103 can in particular be processors that provide hardware-assisted virtualization capabilities. Hardware-assisted virtualization (also known as accelerated virtualization, hardware virtual machine (HVM), or native virtualization) is an approach that enables efficient full virtualization using assistance of hardware capabilities. Example hardware-assisted virtualization models are Virtual 8086 mode, AMD virtualization (AMD-V), Intel virtualization (VT-x), VIA virtualization (VIA VT), Interrupt virtualization (AMD AVIC and Intel APICv) and Graphics Virtualization Technology (Intel GVT-d, GVT-g and GVT-s).

The at least one first operating system 102 and the at least one second operating system 104 can be software that manages at least a part of the resources of the multiprocessor system 100. The at least one first operating system 102 and/or the at least one second operating system 104 can be real-time, embedded, distributed or multi-tasking operating systems. Example operating systems are UNIX operating systems, Linux based operating and/or BSD based systems. The at least one first operating system 102 and the at least one second operating system 104 can be of a same or different type.

The first operating system 102 can be a hypervisor. A hypervisor (which can be a virtual machine monitor) is a computer software, firmware and/or hardware that creates and runs virtual machines. The hypervisor can at least partially function as an operating system and/or provide functionalities of an operating system. It can therefore especially orchestrate access to and use of resources. A virtual machine (VM) can be regarded as an emulation of a computer system and in particular simulates and/or emulates computer hardware by means of software. A VM can also be called guest operating system.

Specifically, the first operating system 102 can be a type-1 hypervisor (also called native or bare-metal hypervisor) or a type-2 hypervisor (also called hosted hypervisor). A type-1 hypervisor runs directly on a computer system's hardware (e.g. the first processor 101) to control the hardware and to manage the guest operating systems. A type-2 hypervisor runs on a host operating system (e.g. the first operating system 102), together with other computer programs. Type-2 hypervisors separate guest operating systems (i.e. the VMs) from the host operating system (e.g. the at least one second operating system 104).

To allow for an exchange of the extended messages (i.e. the messages extended according to the invention), the first processor 101 and the at least one second processor 103 are communicatively linked by a shared memory unit 105. That means that they can communicate using the shared memory unit 105, e.g. by writing and reading to a common memory range. The shared memory unit 105 can be a part of the multiprocessor system's 100 memory resources, e.g. its RAM, and can be writeable by the at least one first operating system 102 and readable by the at least one second operating system 104, and vice versa. Particularly, the at least one first operating system 102 can send the extended messages to the at least one second operating system 104, using the shared memory unit 105. The at least one first operating system 102 can send the extended messages to the at least one second operating system 104 by writing to the shared memory unit 105. The at least one second operating system 104 can receive the extended messages from the at least one first operating system 102 by reading from the shared memory unit 105. This process can also be carried out vice versa, i.e. the at least one second operating system 104 can send the extended messages to the at least one first operating system 102 by writing to the shared memory unit 105. The at least one first operating system 102 can receive the extended messages from the at least one first operating system 104 by reading from the shared memory unit 105. This enables a bi-directional communication between the at least one first operating system 102 and the at least one second operating system 104.

As the exchanged extended messages include information as how to control a virtualization operation, it is ensured that the at least one second operating system 104 can perform the virtualization operation, based on the messages received from the first operating system 102.

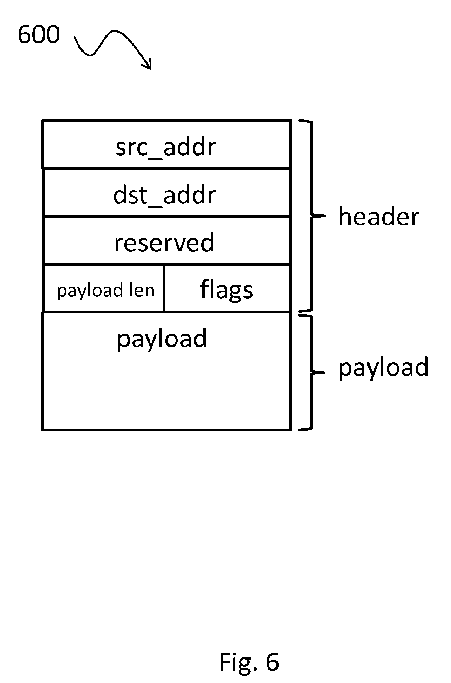

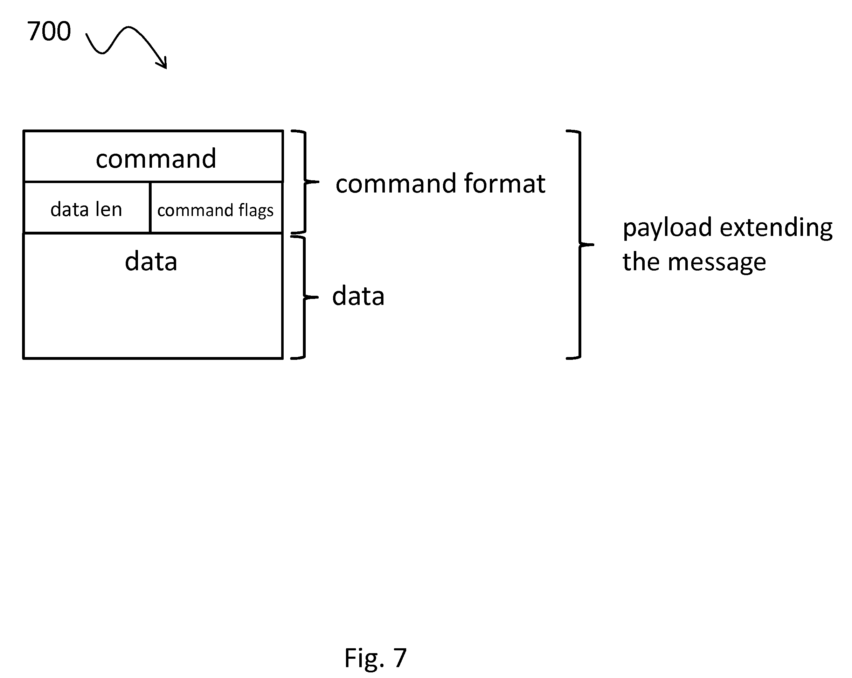

The extended messages with the information to control virtualization operations are messages according to the remoteproc framework, which are extended and thereby enriched with additional information as is especially described also in view of Figs. 6 and 7 below.

The multiprocessor system 100 can be an embedded system, e.g. a computer system with a predefined function within a larger mechanical or electrical system, or a system on a chip (SoC), e.g. an integrated circuit (IC) that integrates various components of an electronic or computing system into a single chip. The multiprocessor system can be integrated in any electronic or computing system, e.g. a smartphone, a tablet computer, a mobile computer, a desktop computer, a workstation, a datacenter or any other integrated electronic device.

The at least one first operating system 102 can provide the at least one second operating system 104 to the at least one second processor 103, to provide the virtualization operation. The at least one first operating system 102 can write an image of the at least one second operating system into the shared memory unit 105 and transmit a message including a memory address of the image of the at least one second operating system in the shared memory unit 105 to the at least one second processor 103 by means of the shared memory unit 105. Subsequently, the at least one second processor 103 starts the at least one second operating system 104 by reading and loading the image of the at least one second operating system stored in the shared memory unit 105 according to the transmitted message. The above operations can be performed during a starting phase of the multiprocessor system 100, e.g. during boot-up of the multiprocessor system 100 or during a starting phase of the at least one second processor 103, e.g. during boot-up of the at least one second processor 103 (also called "booting", where e.g. a processor firmware searches for an operating system to run after a processor is powered). The boot-up procedure can be configured to e.g. start the at least one second operating system 104 from a memory address specified in the extended message sent from the at least one first operating system 102. Starting the at least one second operating system 104 by the at least one second processor 103 can include setting up an initial communication channel for exchanging further messages (e.g. information as how to control the at least one second operating system 104 or the virtualization operation by means of the extended messages) between the at least one first operating system 102 and the at least one second processor 103 and/or the at least one second operating system 104.

After the at least one first operating system 102 and the at least one second operating system 104 are started, the at least one second operating system 104 and/or the virtualization operation performed by the at least one second operating system 104 can be configured and/or controlled by further extended messages sent from the at least one first operating system 102 and received by the at least one second operating system 104, e.g. by means of the initial communication channel.

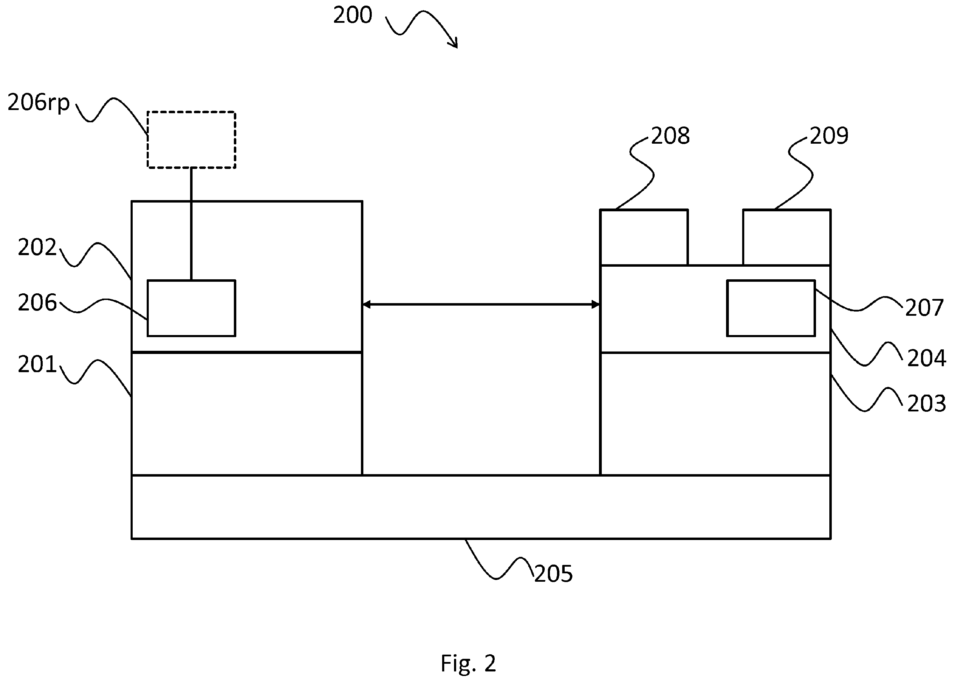

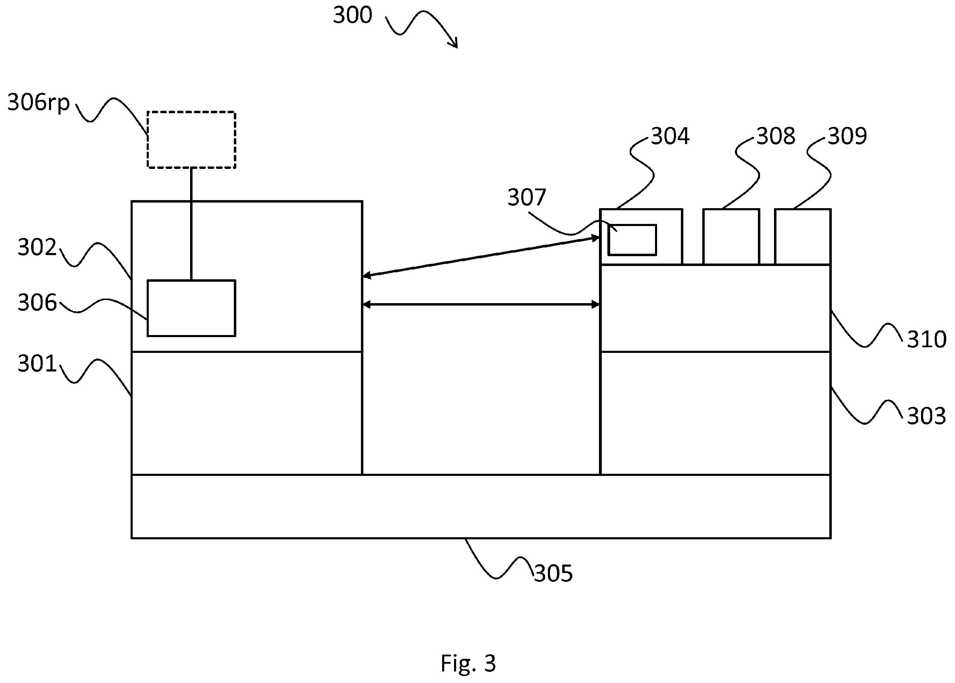

The at least one second operating system 104 can at least partially perform the virtualization operation by changing into a virtualization mode. In the virtualization mode, the at least one second operating system 104 can control the execution of at least one VM, as it is going to be described in more detail in view of Fig. 2. In the virtualization mode, the at least one second operating system 104 can alternatively switch to a hypervisor mode, e.g. by executing a hypervisor on the at least one second processor 103 and/or by switching the at least one second operating system 104 into a guest mode. The hypervisor can in turn control at least one VM. The hypervisor mode is going to be described in more detail in view of Fig. 3. However, also other virtualization operations according to common virtualization technology can be performed by the at least one second operating system 104 according to the extended messages.

When performing the virtualization operation by the at least one second operating system 104, parameters in the extended messages received from the at least one first operating system 102 are taken into account. The parameters in the extended messages in particular can control the configuration of the at least one second operating system 104, and/or the configuration of the virtualization mode, and/or the configuration of the at least one VM, and/or the configuration of the hypervisor mode.

Fig. 2 shows a schematic overview of a multiprocessor system 200 according to an embodiment of the present invention in more detail. In Fig. 2 a first processor 201, at least one first operating system 202, at least one second processor 203, at least one second operating system 204 and a shared memory unit 205 are shown. The multiprocessor system 200, the first processor 201, the at least one first operating system 202, the at least one second processor 203, the at least one second operating system 204 and the shared memory unit 205, as described in view of Fig. 2, essentially show the features and functionalities of the respective components described in view of Fig. 1.

As it is shown in Fig. 2, the at least one first operating system 202 of the multiprocessor system 200 can include an interface 206, which is optional. The interface 206 can receive the extended messages and/or can receive information directly or indirectly corresponding to the extended messages from an external source, which e.g. can in turn be sent from the at least one first operating system 202 to the at least one second operating system 204 to control the at least one second operating system 204 and/or the virtualization operation. External information received by the interface 206 can e.g. include information regarding the configuration of the first processor 201, the at least one first operating system 202, the at least one second processor 203, the at least one second operating system 204, the virtualization mode, the configuration of at least one VM or the configuration of the hypervisor mode. This allows to attach an external system 206rp to the at least one first operating system 202 which enables to provide external resource configuration information to the multiprocessor system 200, e.g. by an external resource provisioning system. The external system 206rp can be a software module, running on the at least one first operating system 202, or a system communicating with the at least one first operating system 202, e.g. by means of network communication. The interface 206 can be used to receive information provided to the at least one first operating system 202 by a command line interface, which can be used to control the multiprocessor system 200.

In Fig. 2, an optional control module 207of the at least one second operating system 204 is shown. The control module 207 enables the at least one second operating system 204 to receive the extended messages sent from the at least one first operating system 202 to the at least one second operating system 204. The control module 207 also initializes and controls the virtualization operation according to the received extended messages.

Fig. 2 additionally shows two VMs 208, 209. Although there are two VMs 208, 209 there can be more or less VMs, e.g. only one VM. This illustrates that the at least one second operating system 204 can at least partially perform the virtualization operation by initializing, starting, and/or stopping the execution of at least one VM.

To perform the virtualization operation, the at least one second operating system 204 can in particular execute a type-2 hypervisor which runs the VMs 208, 209 within the at least on second operating system 204. In this case, the control module 207 can communicate with the type-2 hypervisor to control the virtualization operation according to the received extended messages. In particular, the control module 207 can control the configuration of the VMs 208, 209 according to the parameters in the extended messages received from the at least one first operating system 202 by communicating with the type-2 hypervisor. The parameters in the extended messages received from the at least one first operating system 202 specifically can include information about a number of CPUs and/or an amount of memory and/or input/output devices needed by a VM. The type-2 hypervisor being executed on the at least one second operating system 204 is not shown in Fig. 2. The execution of the VMs 208, 209 by the type-2 hypervisor on the at least one second operating system 204 however is indicated by the VMs 208, 209 being connected to the at least one second operating system 204 in Fig. 2.

Fig. 3 shows a schematic overview of a multiprocessor system 300 according to an embodiment of the present invention in more detail. A first processor 301, at least one first operating system 302, at least one second processor 303, at least one second operating system 304, a shared memory unit 305, an interface 306, an external system 306rp, a control module 307 and two VMs 308, 309 are shown. The multiprocessor system 300, the first processor 301, the at least one first operating system 302, the at least one second processor 303, the at least one second operating system 304, the shared memory unit 305, the interface 306, the external system 306rp, the control module 307 and the two VMs 308, 309 as described in view of Fig. 3, essentially show the features and functionalities of the respective components described in view of Figs. 1 and 2.

Fig. 3 also shows an optional hypervisor 310, wherein the at least one second operating system 304 and the two VMs 308, 309 are connected to the hypervisor 310, and wherein the hypervisor 310 is further connected to the at least one second processor 303. This illustrates that in the virtualization mode, the at least one second operating system 304 can switch to a hypervisor mode.

Switching the at least one second operating system 304 to a hypervisor mode in particular can include that a hypervisor 310, preferably a type-1 hypervisor, is executed on the at least one second processor 303. The hypervisor 310 can be provided to and started on the at least one second processor 303 by the at least one second operating system 304 during a starting phase of the multiprocessor system 300, e.g. during boot-up of the multiprocessor system 300 or during a starting phase of the at least one second operating system 304, e.g. during boot-up of the at least one second operating system 304. However, the hypervisor 310 can be provided to and started on the at least one second processor 303 by the at least one second operating system 304 at any other point of operation of the multiprocessor system 300.

When the hypervisor 310 is executed on the at least one second processor 303, the VMs 308, 309 can be operated and controlled by the hypervisor 310. In this case, the control module 307 of the at least one second operating system 304 can communicate with the hypervisor 310 to control the virtualization operation according to the extended messages received by the at least one second operating system 304. In particular, the control module 307 can control the hypervisor 310 and the configuration of the VMs 308, 309 according to the parameters in the extended messages received from the at least one first operating system 302 by communicating with the hypervisor 310. The parameters in the extended messages received from the at least one first operating system 302 specifically can include information about a numbers of CPUs and/or an amount of memory and/or input/output devices needed by a VM.

When the hypervisor 310 is operated on the at least one second processor 303, the at least one second operating system 304 can be operated in a guest mode.

Operating the at least one second operating system 304 in a guest mode can include that the at least one second operating system 304 is operated by the hypervisor 310, e.g. similar to a VM. In Fig. 3, this is illustrated by the at least one second operating system 304 being connected to the hypervisor 310. However, when being operated in the guest mode, the at least one second operating system 304 still can receive the extended messages from the at least one first operating system 302, in particular by means of the control module 307, and can communicate and exchange the extended messages with the hypervisor 310. Specifically, the at least one second operating system 304 still can write to or read from the shared memory unit 305.

Operating the at least one second operating system 304 in a guest mode alternatively can include that the at least one second operating system 304 is executed directly by the at least one second processor 303. This alternative for executing the at least one second operating system 304 is not shown in Fig. 3. When executing the at least one second operating system 304 directly by the at least on second processor 303, the extended messages from the at least one first operating system 302 can be received directly by the hypervisor 310. The extended messages from the at least one first operating system 302 can also be received by the at least one second operating system 304, in particular by the control module 307 of the at least one second operating system 304. The extended messages can in turn be exchanged between the at least one second operating system 304 and the hypervisor 310, e.g. by means of the control module 307.

In both of the above described operation scenarios, the extended messages are exchanged between the first processor 301 and the at least one second processor 303 by means of the shared memory unit 305. The extended messages can in particular be exchanged uni- or bi-directionally. Sending and receiving the extended messages by the at least one second operating system 304 and/or the hypervisor 310 is in particular enabled by the at least one second operating system 304 and/or the hypervisor 310 being able to write to and/or read from the shared memory unit 305.

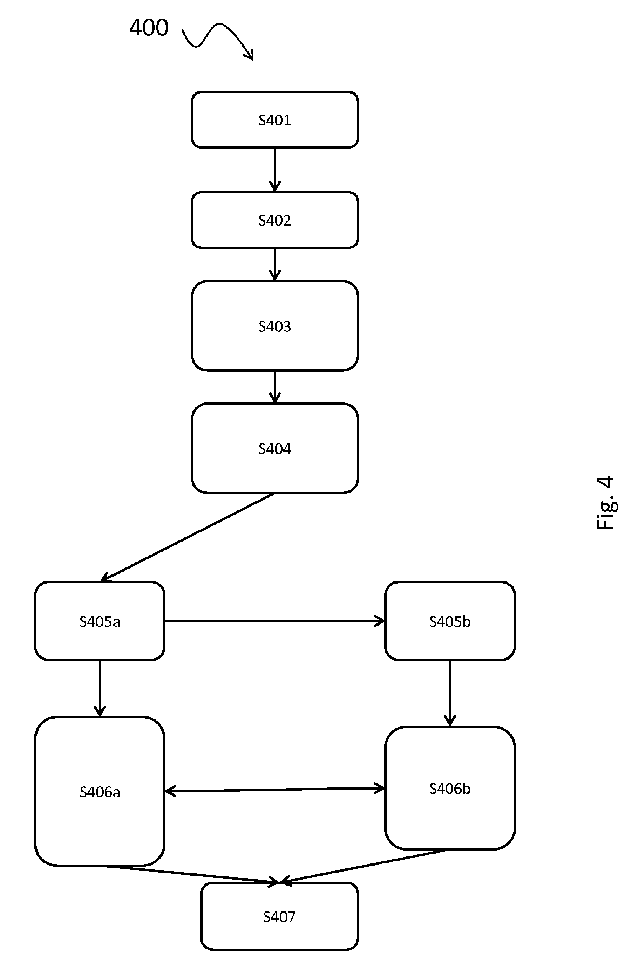

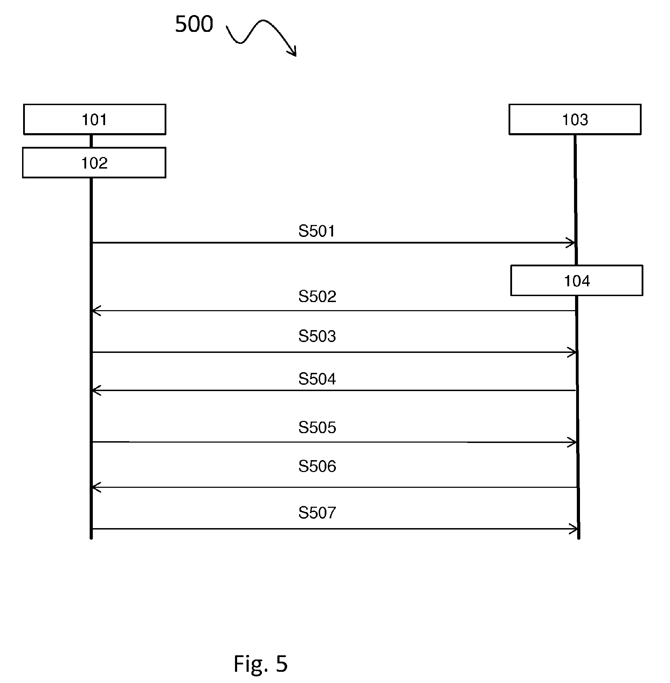

In the following, a typical operating scenario of the multiprocessor system 100 is described in view of Figs. 4 and 5. Although the operating scenario is described with reference to the multiprocessor system 100, it can also be applied to the multiprocessor system 200 or the multiprocessor system 300.

Fig. 4 shows a starting phase of the multiprocessor system 100, in which the at least one second processor 103 and/or the at least one second operating system 104 is started on request and an initial communication channel is established between the at least one first operating system 102 and the at least one second processor 103 and/or the at least one second operating system 104. In the example scenario as described in view of Fig. 4, the operating systems 102, 104 are Linux based and the extended messages are used to start the at least one second processor 103 and/or the at least one second operating system 104 by the at least one first operating system 102. The extended messages are further used to establish and enable the initial communication channel.

In step S401, the at least one first operating system 102 running on the first processor 101 receives a request to start the at least one second processor 103 and to provide the at least one second operating system 104 to the at least one second processor 103. The request can be received by an interface included in the at least one first operating system 102 (e.g. by the interface 206, 306 as described in view of Figs. 2 and 3).

In step S402, the at least one first operating system 102 loads an image of the at least one second operating system, which e.g. can be read from a memory or storage device accessible by the at least one first operating system 102. Typically, this is facilitated by a standard kernel firmware interface, e.g. udev, a device and file input/output manager for Linux based operating systems.

In step S403, the extended messages are used to process the image of the at least one second operating system by the at least one first operating system 102. This includes separating the image of the at least one second operating system into segments and writing the segments to the shared memory unit 105, e.g. to memory addresses which were initially allocated during a starting phase of the multiprocessor system 100 or of the first processor 101. The memory addresses can e.g. be allocated using continuous memory allocation, a memory allocation model that allocates consecutive memory blocks.

In step S404, the extended messages are used to store a resource table in the shared memory unit 105 that includes initialization information which allows to configure the at least one second operating system 104 and to establish an initial communication channel between the at least one first operating system 102 and the at least one second processor 103 and/or the at least one second operating system 104. The resource table including the initialization information can in particular be used to establish the initial communication channel. The initial communication channel can e.g. be a VirtIO based communication channel. VirtIO is a virtualization standard for network and disk device drivers in Linux based operating systems.

In step S405a, the memory blocks allocated to write information to the shared memory unit 105 (in particular to write the image of the at least one second operating system 104 to the shared memory unit 105) in at least some of the above steps S401 to S404 are freed by the at least one first operating system 102. Additionally, the at least one first operating system 102 starts the at least one second processor 103, e.g. by sending extended messages to the at least one second processor 103 by means of the shared memory unit 105.

In step S405b, the boot-up process of the at least one second operating system 104 is started by pointing the at least one second processor 103 to the memory address of the image of the at least one second operating system stored in the shared memory unit 105, which e.g. can be indicated in the extended messages sent in step S405a. When booting the at least one second operating system 104, the resource table including the initialization information can additionally be considered to control and/or configure the at least one second operating system 104. In particular, kexec, a mechanism in Linux based operating systems that enables to load and boot other operating systems, can be used to boot the at least one second operating system 104.

In step S406a, the at least one first operating system 102 waits for the at least one second operating system 104 to complete the boot-up process and to acknowledge the successful boot-up process.

In step S406b, the at least one second processor 103 successfully finished booting the at least one second operating system 104 and acknowledges success of the boot-up process to the at least one first operating system 102.

In step S407, the first processor 101, the at least one second processor 103, the at least one first operating system 102 and the at least one second operating system 104 run simultaneously. The initial communication channel is established between the at least one first operating system 102 and the at least one second processor 103 and/or the at least one second operating system 104. All further message based communication is exchanged by the initial communication channel.

The initial communication channel allows the at least one first operating system 102 to communicate with other processors and operating systems of the multiprocessor system 100, in particular the at least one second processor 103 and/or the at least one second operating system 104, which are included in the multiprocessor system 100.

The initial communication channel between the at least one first operating system 102 and the at least one second processor 103 and/or the at least one second operating system 104 can also be regarded as a remoteproc device. Remoteproc devices can be identified by a textual name and have a local remoteproc address (e.g. a source remoteproc address, which can be a 32-bit integer value) and remote remoteproc address (e.g. a destination remoteproc address, which can be a 32-bit integer value).

Fig. 5 shows a flow-diagram of performing a virtualization operation in the multiprocessor system 100. In the example scenario as described in view of Fig. 5, the extended messages according to the invention are used to perform the virtualization operation, e.g. in steps S503 - S507. The extended messages in particular can be extended remoteproc messages, as it is going to be described in view of Figs. 6 and 7. Although performing the virtualization operation is described with reference to the multiprocessor system 100, it can also be applied to the multiprocessor system 200 or the multiprocessor system 300.

In step S501, the at least one first operating system 102 uses the extended messages to boot the at least one second operating system 104. Once the at least one second operating system 104 is booted, an initial communication channel is established between the at least one first operating system 102 and the at least one second processor 103 and/or the at least one second operating system 104. A destination remoteproc address is assigned to the initial communication channel, which can be a 32-bit integer value. The destination remoteproc address indicates that the at least one second processor 103 and/or the at least one second operating system 104 can be the destination of the initial communication channel.

In step S502, a name service message (e.g. a remoteproc message of the type VIRTIO_RPMSG_F_NS) is sent by the at least one second processor 103 and/or the at least one second operating system 104 to notify the at least one first operating system 102 about the initial communication channel. On arrival of the name service message the at least one first operating system 102 assigns a source remoteproc address, which can be a 32-bit integer value, to the initial communication channel. This indicates that the at least one first operating system 102 is the source of the initial communication channel.

Further messages (i.e. the extended messages according to steps S503 to S507) are exchanged between the at least one first operating system 102 and the at least one second processor 103 and/or the at least one second operating system 104 by means of the initial communication channel. Sending the extended messages by the at least one first operating system 102 can e.g. be controlled by an interface included in the at least one first operating system 102 (e.g. the interface 206, 306 as described in view of Figs. 2 and 3).

In step S503, an extended message is sent from the at least one first operating system 102 to the at least one second processor 103 and/or the at least one second operating system 104 in order to instruct the at least one second operating system 104 to perform a virtualization operation, i.e. to switch the at least one second operating system 104 to a hypervisor mode. Switching the at least one second operating system 104 to a hypervisor mode in particular can include that a hypervisor, preferably a type-1 hypervisor, is started on the at least one second processor 103. The hypervisor can be the hypervisor 310 as described in view of Fig. 3. The extended message is preferably received by a control module in the at least one second operating system 104 (e.g. the control module 207, 307 as described in view of Figs. 2 and 3).

In step S504, the at least one second operating system 104 acknowledges the receipt of the extended message sent in step S503 and the successful start of the type-1 hypervisor.

In case that the virtualization operation to be performed by the at least one second operating system 104 does not include switching the at least one second operating system 104 to a hypervisor mode, but e.g. includes controlling a VM in a type-2 hypervisor that is executed by the at least one second operating system 104, the extended messages exchanged in steps S503 and S504 can be skipped.

In step S505, extended messages including parameters for VM configuration are sent to the at least one second operating system 104 by the at least one first operating system 102. In case that the at least one second operating system 104 was switched to the hypervisor mode and the type-1 hypervisor was started according to steps S503 and S504, the extended messages are forwarded to the type-1 hypervisor by the control module (e.g. the control module 307 as described in view of Fig. 3). The extended messages including the parameters for VM configuration can also be sent to the hypervisor directly. The type-1 hypervisor can in turn provision and control the VMs (e.g. the VMs 308, 309 as described in view of Fig. 3) according to the parameters for VM configuration in the extended messages.

In case that the at least one second operating system 104 was not switched to a hypervisor mode, but a type-2 hypervisor is operated by the at least one second operating system 104, the extended messages are forwarded to the type-2 hypervisor by the control module (e.g. the control module 207 as described in view of Fig. 2). The type-2 hypervisor can in turn provision and control the VMs (e.g. the VMs 208, 209 as described in view of Fig. 2) according to the parameters for VM configuration in the extended messages.

In step S506, the at least one second operating system 104 acknowledges the receipt of the extended messages sent in step S505 and the successful configuration of the VMs. In step S507, a management interface is established between the at least one first operating system 102 and the at least one second operating system 104. The management interface e.g. enables to control and/or configure the at least one second processor 103, and/or the at least one second operating system 104, and/or the type-1 hypervisor operated by the at least one second processor 103, and/or the type-2 hypervisor operated in the at least on second operating system 104, and/or the VMs operated by the type-1 or type-2 hypervisor. The management interface can in particular be connected to, or can be the interface 206, 306 as described in view of Figs. 2 and 3.

In particular, all further communication between the at least one first operating system 102 and the at least one second operating system 104 can be processed by means of the management interface. The management interface can specifically be enabled by the initial communication channel established between the at least one first operating system 102 and the at least one second processor 103 and/or the at least one second operating system 104.

Fig. 6 shows a schematic overview of a packet structure of a message 600, e.g. a remoteproc message, or a message similar to a remoteproc message. The message 600 can include the following fields:
- src_addr: This field is e.g. of 32-bit length, and indicates a source address of the initial communication channel, e.g. a source remoteproc address of a remoteproc device.
- dst_addr: This field is e.g. of 32-bit length, and indicates a destination address of the initial communication channel, e.g. a destination remoteproc address of a remoteproc device.
- reserved: This field is e.g. of 32-bit length and can carry information which is reserved, e.g. for future use.
- payload len: This field is e.g. of 16-bit length and indicates the length of the information which is transmitted in the payload field.
- flags: This field is e.g. of 16-bit length and contains integers that can be interpreted as a sequence of boolean bits, which e.g. indicate predefined states of communication in the message. The flags field can in particular include flags according to the remoteproc message structure.
- payload: The length of this field is determined by the value of the payload len field above and carries the payload which is to be transmitted by the message.

The fields src_addr, dst_addr, reserved, payload len and flags form the header of the message. The field payload contains the payload to be transmitted by the message.

In order to extend the message, a new payload structure for information to be transmitted in the payload field of the message is described in view of Fig. 7.

Fig. 7 shows a schematic overview of a payload structure 700 according to the invention. A message including payload according to the structure as described in the following can be regarded as the extended message (i.e. the extended message according to the invention). The structure as how to extend the payload of a message includes the following fields:
- command: This field is e.g. of 32-bit length and contains information to control the virtualization operation. A non-exhaustive list of example commands is given below.
- data len: This field is e.g. of 16-bit length and indicates the length of the information which is to be transmitted in the data field.
- command flags: This field is e.g. of 16-bit length and contains integers that can be interpreted as a sequence of boolean bits, which e.g. indicate predefined states of communication when transmitting the commands.
- data: Data not relating to the commands for controlling the virtualization operation can be transmitted in this field. In particular all information that is transmitted in the payload field of the message can be transmitted in the data field of the extended message.

The fields command, data len and command flags form a command format of the extended message. The command format together with the data field form the payload structure for extending the message.

A list of example commands, which can be included in the command field and their resulting actions to be performed by the components of the multiprocessor system 100 is given in the following. Although the commands are described with reference to the multiprocessor system 100, they can also be applied to the multiprocessor system 200 or the multiprocessor system 300.
- configure second operating system: This command can be used to start, control or stop the at least one second operating system 104 and in particular to control the virtualization operating in the at least one second operating system 104.
- configure virtualization mode: This command can be used to start, control or stop the virtualization mode.
- configure virtual machine: This command can be used to initialize, start, control or stop at least one VM. The command can in particular be used to configure a VM operated by a hypervisor, e.g. a type-1 hypervisor or a type-2 hypervisor. The command can define a number of CPUs and/or an amount of memory and/or input/output devices needed by a VM.
- configure hypervisor mode: This command can be used to start, control or stop the hypervisor mode. The command can in particular be used to start a type-1 hypervisor on the at least one second processor 103 and/or to switch the at least one second operating system 104 into a guest mode. The command can also be used to start a type-2 hypervisor in the at least one second operating system 104.
- acknowledge: This command can be used to signal successful completion of execution of any of the commands as described above.

The commands as described above can also be regarded as the parameters for performing the virtualization operation, in particular parameters for configuring at least one virtual machine and/or the virtualization mode as described in view of Fig. 1.

The commands can in particular be interpreted and processed by the control module 207, 307 as described in view of Figs. 2 and 3.

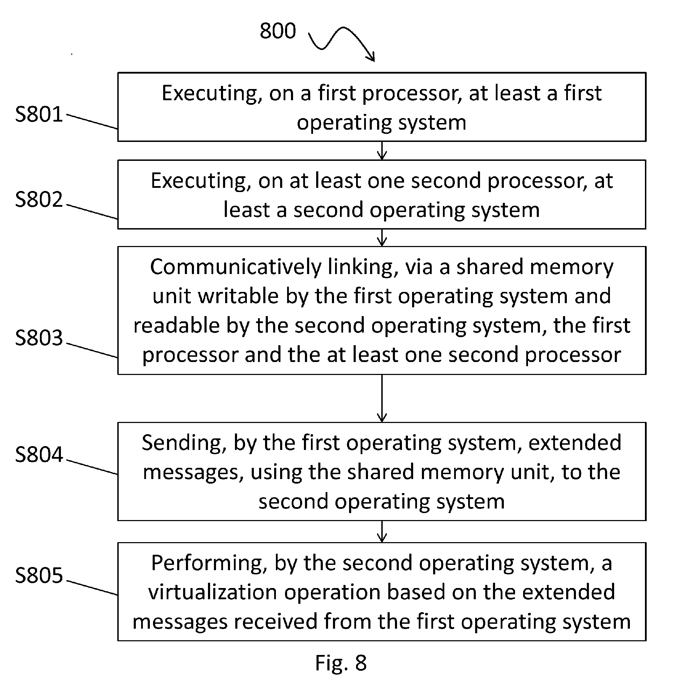

Fig. 8 shows a flow-diagram of a method 800 according to an embodiment of the present invention. Preferably, the method is carried out by one of the microprocessor systems 100, 200, 300 described above.

The method 800 comprises a first step of executing S801, on a first processor 101, at least a first operating system 102. Further the method 800 comprises a second step of executing S802, on at least one second processor103, at least a second operating system 104. Further, the method 800 comprises a third step of communicatively linking S803, via a shared memory unit 105 writable by the first operating system 102 and readable by second operating system 104, the first processor 101 and the at least one second processor 103. Further the method 800 comprises a fourth step of sending S804, by the first operating system 102, extended messages, using the shared memory unit 105, to the second operating system 104. Further the method 800 comprises a fifth step of performing S805, by the second operating system 104, a virtualization operation based on the extended messages received from the first operating system 102.

The invention has been described in conjunction with various embodiments herein. However, other variations to the enclosed embodiments can be understood and effected by those skilled in the art and practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the internet or other wired or wireless telecommunication systems.

## Claims

1. Multiprocessor system (100), comprising:
- a first processor (101) configured to execute at least a first operating system (102), and
- at least one second processor (103) configured to execute at least a second operating system (104), wherein
- the first processor (101) and the at least one second processor (103) are communicatively linked by a shared memory unit (105) writable by the first operating system (102) and readable by the second operating system (104),
wherein
the first operating system (102) is configured to send extended messages, using the shared memory unit (105), to the second operating system (104), wherein the second operating system (104) is configured to perform a virtualization operation based on the extended messages received from the first operating system (102).

2. Multiprocessor system (100) according to claim 1, wherein the first operating system (102) is configured to provide the second operating system (104) to the second processor (103), and wherein the second processor (103) is configured to start the second operating system (104) in a starting phase.

3. Multiprocessor system (100) according to claim 1 or 2, wherein the second operating system (104) and/or the virtualization operation is configured by the extended messages received by the second operating system (104).

4. Multiprocessor system (100) according to any one of the preceding claims, wherein the second operating system (104) is configured to at least partially perform the virtualization operation by changing into a virtualization mode.

5. Multiprocessor system (200; 300) according to any one of the preceding claims, wherein the second operating system (204; 304) is configured to at least partially perform the virtualization operation by initializing, starting and/or stopping execution of at least one virtual machine (208; 308).

6. Multiprocessor system (200; 300) according to any one of the preceding claims, wherein the extended messages are configured to define parameters for performing the virtualization operation, in particular parameters for configuring the at least one virtual machine (208; 308) and/or the virtualization mode.

7. Multiprocessor system (200; 300) according to any one of the preceding claims, wherein the second operating system comprises a control module (207; 307), which is configured to receive the extended messages and to initialize the virtualization operation.

8. Multiprocessor system (300) according to any one of the preceding claims, wherein in the virtualization mode, the second operating system is configured to switch to a hypervisor mode.

9. Multiprocessor system (100) according to any one of the preceding claims, wherein the first operating system (102) is configured to send the extended messages, by writing to the shared memory unit (105), and the second operating system (104) is configured to receive the extended messages, by reading from the shared memory unit (105) and/or vice versa, in particular to facilitate a bi-directional communication.

10. Multiprocessor system (200; 300) according to any one of the preceding claims, wherein the first operating system (202; 302) is configured to provide an interface (206; 306) for receiving the extended messages and/or information directly or indirectly defining the extended messages.

11. Multiprocessor system (100) according to any one of the preceding claims, wherein the multiprocessor system (100) is an embedded system.

12. Multiprocessor system (100) according to any one of the preceding claims, wherein the first operating system (102) is a hypervisor.

13. Method (800) for operating a multiprocessor system (100) comprising the steps of:
- executing (S801), on a first processor (101), at least a first operating system (102), and
- executing (S802), on at least one second processor (103), at least a second operating system (104),
- communicatively linking (S803), via a shared memory unit (105) writable by the first operating system (102) and readable by second operating system (104), the first processor (101) and the at least one second processor (103),
- sending (S804), by the first operating system (102), extended messages, using the shared memory unit (105), to the second operating system (104), and
- performing (S805), by the second operating system (104), a virtualization operation based on the extended messages received from the first operating system (102).

## Amended claims

### Amended claims in accordance with Rule 137(2) EPC.

1. Multiprocessor system (100), comprising:
- a first processor (101) configured to execute at least a first operating system (102), and
- at least one second processor (103) configured to execute at least a second operating system (104), wherein
- the first processor (101) and the at least one second processor (103) are communicatively linked by a shared memory unit (105) writable by the first operating system (102) and readable by the second operating system (104), wherein
the first operating system (102) is configured to send extended messages, using the shared memory unit (105), to the second operating system (104), wherein the second operating system (104) is configured to perform a virtualization operation based on the extended messages received from the first operating system (102), and is configured to at least partially perform the virtualization operation by initializing, starting and/or stopping execution of at least one virtual machine (208; 308).

2. Multiprocessor system (100) according to claim 1, wherein the first operating system (102) is configured to provide the second operating system (104) to the second processor (103), and wherein the second processor (103) is configured to start the second operating system (104) in a starting phase.

3. Multiprocessor system (100) according to claim 1 or 2, wherein the second operating system (104) and/or the virtualization operation is configured by the extended messages received by the second operating system (104).

4. Multiprocessor system (100) according to any one of the preceding claims, wherein the second operating system (104) is configured to at least partially perform the virtualization operation by changing into a virtualization mode.

5. Multiprocessor system (200; 300) according to any one of the preceding claims, wherein the extended messages are configured to define parameters for performing the virtualization operation, in particular parameters for configuring the at least one virtual machine (208; 308) and/or the virtualization mode.

6. Multiprocessor system (200; 300) according to any one of the preceding claims, wherein the second operating system comprises a control module (207; 307), which is configured to receive the extended messages and to initialize the virtualization operation.

7. Multiprocessor system (300) according to any one of the preceding claims, wherein in the virtualization mode, the second operating system is configured to switch to a hypervisor mode.

8. Multiprocessor system (100) according to any one of the preceding claims, wherein the first operating system (102) is configured to send the extended messages, by writing to the shared memory unit (105), and the second operating system (104) is configured to receive the extended messages, by reading from the shared memory unit (105) and/or vice versa, in particular to facilitate a bi-directional communication.

9. Multiprocessor system (200; 300) according to any one of the preceding claims, wherein
the first operating system (202; 302) is configured to provide an interface (206; 306) for receiving the extended messages and/or information directly or indirectly defining the extended messages.

10. Multiprocessor system (100) according to any one of the preceding claims, wherein the multiprocessor system (100) is an embedded system.

11. Multiprocessor system (100) according to any one of the preceding claims, wherein the
first operating system (102) is a hypervisor.

12. Method (800) for operating a multiprocessor system (100) comprising the steps of:
- executing (S801), on a first processor (101), at least a first operating system (102), and
- executing (S802), on at least one second processor (103), at least a second operating system (104),
- communicatively linking (S803), via a shared memory unit (105) writable by the first operating system (102) and readable by second operating system (104), the first processor (101) and the at least one second processor (103),
- sending (S804), by the first operating system (102), extended messages, using the shared memory unit (105), to the second operating system (104), and
- performing (S805), by the second operating system (104), a virtualization operation based on the extended messages received from the first operating system (102), wherein the vitualization operation is at least partially performed by initializing, starting and/or stopping execution of at least one virtual machine.
